# EUROPEAN PATENT SPECIFICATION

(11) **EP 3 537 188 B1**
(45) Date of publication and mention of the grant of the patent: **27.10.2021**
(21) Application number: 17867548.4
(22) Date of filing: 31.10.2017
(51) Int. Cl.: G02B 26/00, G02B 1/02, G02B 7/00, G03B 11/00, G03B 21/16, G03B 21/20

(54) **COLOR WHEEL AND METHOD FOR MANUFACTURING A COLOR WHEEL**
FARBRAD UND VERFAHREN ZUR HERSTELLUNG EINES FARBRADS
CERCLE CHROMATIQUE ET PROCÉDÉ DE FABRICATION DE CERCLE CHROMATIQUE

(30) Priority: 02.11.2016 JP 2016215027
(43) Date of publication of application: 11.09.2019
(73) Proprietor: Kyocera Corporation, Kyoto-shi Kyoto 612-8501 (JP)
(72) Inventor: KUBO, Yoshinori, Kyoto-shi Kyoto 612-8501 (JP)
(74) Representative: Viering, Jentschura & Partner mbB Patent- und Rechtsanwälte
(86) International application number: PCT/JP2017/039317
(87) International publication number: WO 2018/084140

(56) References cited:
- EP-A1- 2 090 680
- WO-A1-2016/153070
- WO-A1-2016/153070
- JP-A- H0 883 802
- JP-A- H11 337 919
- JP-A- 2014 195 069
- JP-A- 2014 232 866
- JP-A- 2015 108 845
- JP-A- 2015 121 763
- JP-A- 2016 118 604
- JP-A- 2016 163 969
- JP-A- 2016 177 272
- US-A1- 2014 071 683
- US-A1- 2015 049 307

## Description

The present invention relates to a color wheel, a projector, and a method for manufacturing a color wheel.

### BACKGROUND ART

Conventionally, there has been proposed a projector using a rotating color wheel. For example, Patent Document 1 discloses an example of a projector using a color wheel. Moreover, glass, crystal, sapphire, and the like are mentioned as a material used for a substrate for the color wheel.

US 2015/049307 A1 discloses a light source apparatus including a light source unit and an output unit, the output unit including a light emitter and a base unit, wherein the base unit is rotatable about a predetermined rotation axis and contains a crystalline member having a crystal axis direction set to a direction different from a direction orthogonal to an optical axis direction of the output light.

US 2014/071683 A1 discloses a wavelength conversion element including a phosphor layer including a plurality of phosphor particles and a matrix that is located among the plurality of phosphor particles, wherein the matrix is formed of zinc oxide and the zinc oxide is columnar crystals or a single crystal in a c-axis orientation.

EP 2090680 A1 discloses a sapphire substrate comprising an off-angle plane slanted from an m-plane comprising steps and terraces.

WO 2016/153070 A1 discloses a sapphire member containing sapphire as a main constituent having a main surface parallel to a c-plane of a sapphire crystal, the sapphire member including a plurality of terrace structure layers in at least a part of the main surface.

### RELATED ART DOCUMENT

### PATENT DOCUMENT

Patent Document 1: Japanese Unexamined Patent Publication No. 2011-186132

### SUMMARY OF THE INVENTION

The invention provides a color wheel according to claim 1, a projector according to claim 4, and a method for manufacturing a color wheel according to claim 5. Preferred embodiments are disclosed in the dependent claims.

### BRIEF DESCRIPTION OF THE DRAWINGS

Figs. 1(a) and 1(b) are each a schematic view showing an embodiment of a color wheel, where Fig. 1(a) is a top view of the color wheel, and Fig. 1(b) is a cross-sectional view of the color wheel.

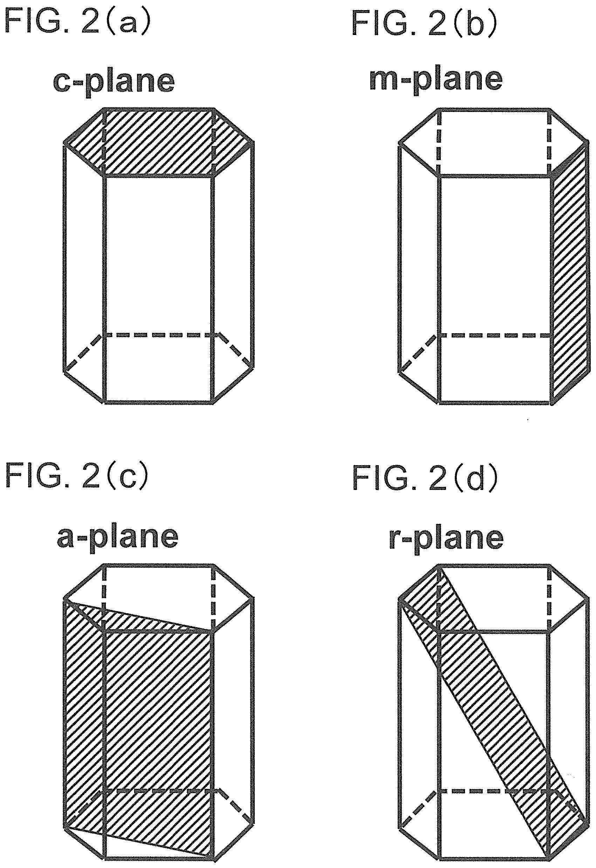

Figs. 2(a) to 2(d) are each a diagram showing a crystal structure of sapphire, where Fig. 2(a) shows a c-plane, Fig. 2(b) shows an m-plane, Fig. 2(c) shows an a-plane, and Fig. 2(d) shows an r-plane.
Fig. 3 is a schematic view for explaining a terrace structure layer.
Figs. 4(a) and 4(b) are each an electron microscope (SEM) photograph of a substrate for a color wheel, where Fig. 4(a) is a photo of a flat portion, and Fig. 4(b) is a photograph of a terrace structure layer.

### EMBODIMENTS FOR CARRYING OUT THE INVENTION

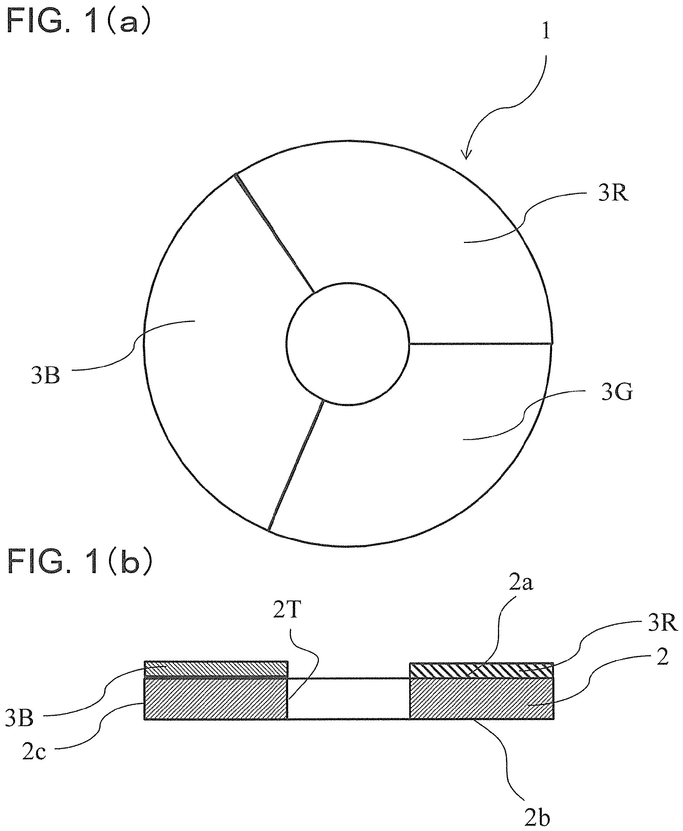

<Color wheel, projector> A color wheel in accordance with the present invention will be described with reference to the drawings. Fig. 1 is a schematic view of a color wheel 1 which is an embodiment of the present invention showing the color wheel 1 having a red colored portion 3R, a green colored portion 3G, and a blue colored portion 3B on a first surface 2a of a substrate 2 for a color wheel.

The color wheel 1 includes the disk-shaped substrate 2 for a color wheel, and a colored portion 3 disposed on the first surface 2a of the substrate 2 for a color wheel. A projector includes a light source, a rotary holder that holds and rotates the color wheel 1, and a micromirror.

The color wheel 1 becomes hot when in use, due to heat transmitted from the light source and a drive motor of the projector, heat from the colored portion 3 heated by irradiated light, and heat that the substrate 2 for a color wheel generates by irradiated light. Further, since the color wheel 1 is used by being rotated at high speed in the projector, the color wheel 1 is subjected to a relatively strong centrifugal force. That is, when used in the projector, the color wheel 1 is subjected to a relatively strong thermal stress and a relatively strong centrifugal force. Also, the color wheel 1 is required to have a high optical transmittance, as a matter of course.

Sapphire is excellent in thermal conductivity and heat dissipation, and is advantageous in that it can suppress temperature rise, has high mechanical strength, being less likely to be damaged even when a relatively strong centrifugal force acts thereon, and has high optical transmittance. However, if sapphire is simply used as the substrate 2 for a color wheel, the anisotropy of sapphire may affect the performance of the color wheel. The present invention has been created as a result of intensive investigations by the inventor of the present application, on the combination of the effect of heat and light in a color wheel and the anisotropy of sapphire crystals.

The relationship between the anisotropy of sapphire and heat will be described. Sapphire is an anisotropic single crystal, and the thermal expansion coefficient differs between a direction perpendicular to the c-axis and a direction parallel to the c-axis. For example, in a-plane sapphire having an a-plane perpendicular to a c-plane on the main surface, there are a direction parallel to the c-axis (c-axis direction) and a direction perpendicular to the c-axis (e.g., m-axis direction).

In a-plane sapphire, the thermal expansion coefficient along the main surface differs depending on the difference in direction. When the thermal expansion coefficient along the main surface differs depending on the difference in direction, a thermal stress occurs due to the difference in the degree of thermal expansion. This may cause warpage, distortion, or even breakage of the substrate 2 for a color wheel.

The substrate 2 for a color wheel is made of a sapphire substrate in which the first surface (one main surface) 2a and a second surface (other main surface) 2b opposite to the first surface are c-planes. All of the directions extending along the main surface of the substrate 2 for a color wheel are directions (e.g., a-axis and m-axis) perpendicular to the c-axis, and despite the difference in direction, the thermal expansion coefficient is substantially the same. For this reason, warpage, distortion, or even breakage of the substrate 2 for a color wheel due to temperature rise is unlikely to occur. The substrate 2 for a color wheel of the embodiment is excellent in heat resistance and excellent in heat dissipation, and therefore can be used for the color wheel 1 in a higher temperature range.

When the color wheel 1 using the substrate 2 for a color wheel of the embodiment is used in a projector, deformation and breakage due to temperature rise of the color wheel 1 are suppressed. Hence, the color wheel 1 can be downsized and be used in a higher temperature range. As a result, a compact and highly reliable projector can be formed.

In addition, the relationship between the anisotropy of sapphire and optical characteristics will be described. In terms of optical characteristics, sapphire shows birefringence (the transmitted light is divided into two light beams) in light traveling in a direction inclined with respect to the c-axis. On the other hand, sapphire does not show birefringence in light in a direction parallel to the c-axis. For example, in a-plane sapphire, birefringence occurs in irradiated light, so that an image formed by the transmitted irradiated light is distorted or blurred.

The two main surfaces (first surface 2a and second surface 2b) of the substrate 2 for a color wheel of the embodiment are disposed substantially perpendicular to the traveling direction of irradiated light. In the substrate 2 for a color wheel, both of the first surface 2a and the second surface 2b are parallel to the c-plane (perpendicular to c-axis) of sapphire. Accordingly, the irradiated light transmitted through the substrate 2 for a color wheel is light in a direction parallel to the c-axis. In the substrate 2 for a color wheel of the embodiment, birefringence of the transmitted irradiated light is suppressed, so that the image formed by the transmitted irradiated light is less distorted or blurred, for example.

The substrate 2 for a color wheel has a third surface 2c (also referred to as side surface) connected to the first surface 2a and the second surface 2b, and may have a flat portion in at least a part of the third surface 2c. Further, the substrate 2 for a color wheel has, in at least a part of the third surface 2c, multiple terrace structure layers each having a terrace surface and a side surface in contact with an edge line 6 of the terrace surface.

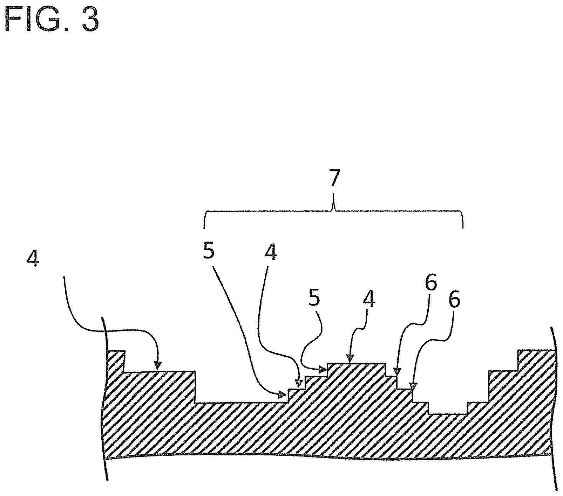

Fig. 3 is a schematic view for explaining a terrace structure layer 7. A terrace surface 4 is a surface that spreads flatly. A side surface 5 is a surface extending perpendicular to the terrace surface 4 from the edge line 6 of the terrace surface 4. The terrace structure layer 7 has an irregular shape, and the surface area is larger than the case where there is no irregularity. Note that the irregularity of the terrace structure layer 7 is different from extremely sharp projections and depressions that tend to cause cracks and breakage. The terrace surface 4 in the terrace structure layer 7 has an area of 1 µm square or more, and the width of the terrace surface 4 is about 1 to 10 µm. Further, the height of the side surface 5 is such a height that at least an edge at the boundary of the terrace surface 4 and the side surface 5 can be perceived by observation with an electron microscope of about 3,000 times magnification.

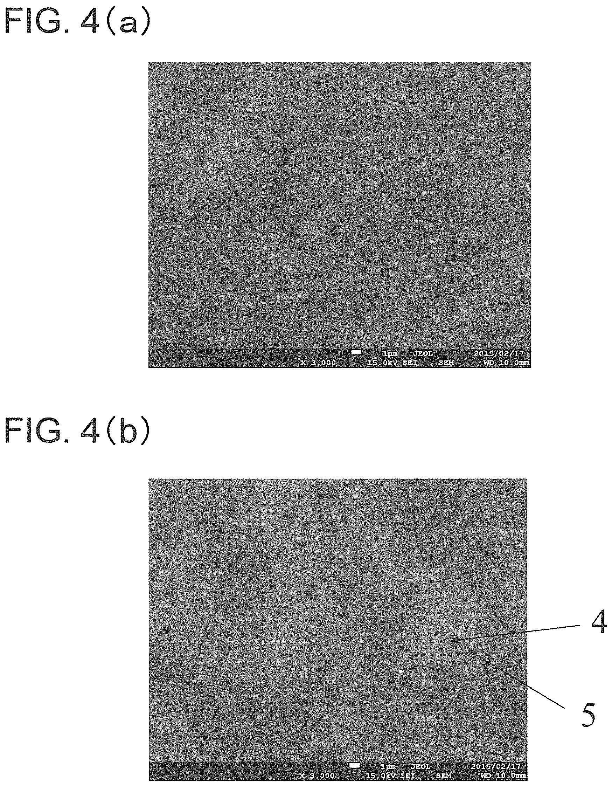

Fig. 4(a) is an electron microscope (SEM) photograph at a magnification of 3,000 times showing an example of a flat portion, and Fig. 4(b) of a terrace structure layer.

The flat portion, as shown in Fig. 4(a), has few cracks and chippings, and stress concentration as a cause of cracks, chippings, and the like is less likely to occur. The third surface 2c is a region that moves relatively fast at the time of rotation of the color wheel 1, and is subjected to a strong centrifugal force. When at least a part of the third surface 2c has a flat portion as shown in Fig. 4(a), a region where stress is likely to be concentrated is reduced in the third surface 2c, whereby cracks, breakage, and the like of the substrate 2 for a color wheel is suppressed.

Further, as shown in Fig. 4(b), in the portion including the terrace structure layer 7, the substrate 2 for a color wheel actively exchanges heat with air when moving at high speed as it rotates. That is, the portion including the terrace structure layer 7 exerts a high heat dissipation effect. Since the substrate 2 for a color wheel includes such a terrace structure layer 7 on the third surface 2c, the heat dissipation effect is relatively high. Hence, excessive temperature rise, and warpage, distortion, and the like due to temperature rise are suppressed.

The transmittance at wavelengths of 400 nm to 800 nm of the substrate 2 for a color wheel of the embodiment is 82% or more. The optical transmittance can be measured by using an ultraviolet-visible near infrared spectrophotometer UV-3100PC manufactured by Shimadzu Corporation, for example. The measurement conditions are, for example, wavelength range: 400 to 800 nm, scan speed: high speed, sampling pitch: 2.0 nm, and slit width: 2.0 nm.

A white light such as a mercury lamp or ultraviolet light is used as a light source when using the color wheel 1 having the red colored portion 3R, the green colored portion 3G, and the blue colored portion 3B as shown in Fig. 1. The red colored portion 3R, the green colored portion 3G, and the blue colored portion 3B are filters for converting irradiated light (white light) into red light, green light, and blue light, and are each formed into an annular sector area having a predetermined central angle (e.g., 120°). Visible light monochromatic light sources such as LED and a laser may be used as a light source, and a fluorescent substance may be used as the colored portion 3.

In the embodiment, the substrate 2 for a color wheel may be provided with a fixing hole 2T or the like for fixing the substrate 2 for a color wheel to a rotary holder 3.

A chamfer may be provided on the side surface of the substrate 2 for a color wheel, between the third surface 2c and the first surface 2a or the second surface 2b.

### <Method for manufacturing a color wheel>

Next, a method for manufacturing a color wheel according to the present invention will be described.

First, a sapphire substrate is prepared. A sapphire substrate is formed by cutting and processing, with a multi-wire saw, a sapphire ingot grown by using polycrystalline alumina as the raw material into a desired shape, such as a disk shape with a diameter of 10 mm to 100 mm and a thickness of 0.1 mm to 1.0 mm, so that a c-plane is the main surface.

There is no particular limitation on the method of growing the sapphire ingot, and a sapphire ingot grown by the edge-defined film-fed growth (EFG) method, the Czochralski method (CZ), the Kylopoulos method, or the like can be used.

Then, as necessary, a hole or the like to be the fixing hole 2T for fixing the substrate 2 for a color wheel to the rotary holder is formed in the sapphire substrate. Then, for example, the sapphire substrate is processed with a lapping apparatus so that an arithmetic mean roughness Ra of both of the main surfaces may be set to 1.0 µm or less. Lapping may be performed in a self-weight mode using a cast iron surface plate and diamond abrasive grains having a mean particle size of 25 µm, for example.

In addition, the arithmetic mean roughness Ra in the specification is a value based on JIS B0601 (2013). The arithmetic mean roughness Ra can be measured by using a laser microscope VK-9510 manufactured by Keyence Corporation, for example. Preferable measurement conditions are, for example, measurement mode of ultradeep color, measurement magnification of 1000 times, measurement pitch of 0.02 µm, a cutoff filter λs of 2.5 µm, a cutoff filter λc of 0.08 mm, and measurement length of 100 µm to 500 µm.

Following the lapping step, CMP (chemical mechanical polishing) using colloidal silica is performed to mirror-polish both main surfaces of the sapphire substrate, so that the arithmetic mean roughness Ra is 30 nm or less, and preferably 1 nm or less. Thus, the substrate 2 for a color wheel of the embodiment can be manufactured.

When CMP (chemical mechanical polishing) using colloidal silica is performed after the lapping step, the processing damage layer on both main surfaces of the sapphire substrate can be reduced, whereby optical transmittance can be somewhat increased.

Further, heat treatment is performed to form the flat portion and the terrace structure layer 7 on the third surface 2c of the substrate 2 for a color wheel. In this case, the heat treatment may be performed after the lapping step.

According to the invention, the sapphire substrate is held at a temperature of 1800°C or higher and 2000°C or lower for 5 hours or more, and then cooled to room temperature over a cooling time of 6 hours or more. The heat treatment step is performed in an inert gas atmosphere such as argon, or in vacuo. Thus, rearrangement of atoms and crystal defects proceeds on the surface and on the inner side of the sapphire substrate, and microcracks, crystal defects, and internal stress formed on the surface and on the inner side in the processing step can be reduced as well.

Further, in the embodiment, the heat treatment allows rearrangement of atoms to proceed on the surface (main surface and side surface) of the sapphire substrate so that the surface energy becomes smaller, whereby residual stress and microcracks formed in the processing step are reduced. The heat treatment also forms a surface having a terrace structure layer 7 formed of multiple flat terrace surfaces 4 and side surfaces 5 connecting the terrace surfaces 4 having different heights.

In the embodiment, the terrace structure layer 7 having multiple terrace surfaces 4 and side surfaces 5 in contact with the edge lines 6 of the terrace surfaces 4 is formed on the main surface and the side surface of the heat-treated sapphire substrate. For example, multiple terrace structure layers 7 in which the c-plane is the terrace surface 4 and mainly the m-plane is the side surface 5 are formed on the c-plane.

In the embodiment, multiple terrace structure layers 7 in which the a-plane is the terrace surface 4 and mainly the m-plane is the side surface 5 are formed in a region of the side surface 2c centered on a portion intersecting the a-axis. A flat surface without the terrace surface 4 and the side surface 5, that is, without the terrace structure layer 7 is formed in a region of the side surface centered on a portion perpendicular to the m-axis. In the case where both the terrace structure layer 7 and the flat portion are formed on the side surface 2c, an intermediate region in which the structure gradually changes exists between the terrace structure layer 7 and the flat portion.

In the embodiment, although the flat portion, the terrace structure layer 7, and the intermediate region have differences in surface shape, in all three regions, the heat treatment may promote the rearrangement of atoms and crystal defects, and reduce the microcracks, crystal defects, and internal stress formed on the surface and on the inner side in the processing step.

Next, both main surfaces of the sapphire substrate are mirror-polished by CMP (chemical mechanical polishing) using colloidal silica, to set the arithmetic mean roughness Ra to 30 nm or less, and preferably 1 nm or less. The substrate 2 for a color wheel of the embodiment can be manufactured through the process described above, for example. In the polishing step, the terrace structure layer 7 on the main surface disappears, but the terrace structure layer 7 on the side surface 2c is left.

Then, for example, a phosphor or a color filter to be the colored portion 3 is formed on a desired region of the main surface of the obtained substrate 2 for a color wheel by a method such as vapor deposition, application and baking, etc. and the color while 1 of the embodiment may be manufactured.

As mentioned above, although embodiment of this indication has been described, this indication is not limited to the above-mentioned embodiment. It is needless to say that the present disclosure may be subjected to various improvements and modifications within the scope as defined by the independent claims.

### DESCRIPTION OF THE REFERENCE NUMERAL

- 1:: Color wheel
- 2:: Substrate for a color wheel
- 2a:: First surface
- 2b:: Second surface
- 2c:: Third surface
- 2T:: Fixing hole
- 3:: Colored portion
- 3R:: Red colored portion
- 3G:: Green colored portion
- 3B:: Blue colored portion
- 4:: Terrace surface
- 5:: Side surface
- 6:: Edge line
- 7:: Terrace structure layer

## Claims

1. A color wheel (1) comprising:
a substrate for a color wheel (2), the substrate made of sapphire and comprising a plate shape including a first surface (2a), a second surface (2b) opposite to the first surface (2a), and a third surface (2c) connected to the first surface (2a) and the second surface (2b),
wherein the first surface (2a) and the second surface (2b) are c-planes,
a colored portion (3) on at least the first surface (2a) or the second surface (2b),
**characterised in that**
a plurality of terrace structure layers (7) each having a terrace surface (4) and a side surface (5) in contact with an edge line (6) of the terrace surface (4) are positioned in at least a part of the third surface (2c)

2. The color wheel (1) according to claim 1, the substrate for a color wheel (2) further comprising:
a flat portion in at least a part of the third surface (2c) .

3. The color wheel (1) according to claim 1 or 2, wherein a width of the terrace surface (4) is 1.0 µm to 5.0 µm.

4. A projector comprising the color wheel (1) according to any one of claims 1 to 3.

5. A method for manufacturing a color wheel (1), the method comprising:
(i) forming a substrate for a color wheel (2), comprising
a step of preparing a sapphire plate in which a first surface (2a) and a second surface (2b) opposite to the first surface (2a) are c-planes,
a heat treatment step of holding the sapphire plate in a vacuum atmosphere or an inert gas atmosphere at a temperature of 1800°C or higher and 2000°C or lower for 5 hours or more, and then cooling to room temperature over 6 hours or more, and
a mirror-polishing step of mirror-polishing the first surface (2a) and the second surface (2b) after the heat treatment step; and
(ii) forming a colored portion (3) on at least the first surface (2a) or the second surface (2b) of the obtained substrate for a color wheel (2).

## Patentansprüche

1. Farbrad (1), aufweisend:
ein Substrat für ein Farbrad (2), wobei das Substrat aus Saphir hergestellt ist und eine Plattenform aufweist, die eine erste Fläche (2a), eine zweite Fläche (2b) gegenüber der ersten Fläche (2a) und eine dritte Fläche (2c), die mit der ersten Fläche (2a) und der zweiten Fläche (2b) verbunden ist, aufweist,
wobei die erste Fläche (2a) und die zweite Fläche (2e) c-Ebenen sind,
einen Farbabschnitt (3) auf zumindest der ersten Fläche (2a) oder der zweiten Fläche (2b),
**dadurch gekennzeichnet, dass**
eine Mehrzahl von Terrassenstrukturschichten (7), die jeweils eine Terrassenfläche (4) und eine Seitenfläche (5) in Kontakt mit einer Kantenlinie (6) der Terrassenfläche (4) haben, in mindestens einem Teil der dritten Fläche (2c) positioniert sind.

2. Farbrad (1) gemäß Anspruch 1, wobei das Substrat für ein Farbrad (2) ferner aufweist:
einen flachen Abschnitt in mindestens einem Teil der dritten Fläche (2c).

3. Farbrad (1) gemäß Anspruch 1 oder 2, wobei eine Breite der Terrassenfläche (4) 1,0 µm bis 5,0 µm beträgt.

4. Projektor, aufweisend das Farbrad (1) gemäß irgendeinem der Ansprüche 1 bis 3.

5. Verfahren zum Herstellen eines Farbrades (1), wobei das Verfahren aufweist:
(i) Ausbilden eines Substrats für ein Farbrad (2), aufweisend
einen Schritt zum Bereitstellen einer Saphirplatte, bei der eine erste Fläche (2a) und eine zweite Fläche (2b), die der ersten Fläche (2a) gegenüberliegt, c-Ebenen sind,
einen Wärmebehandlungsschritt zum Halten der Saphirplatte in einer Vakuumatmosphäre oder einer Inertgasatmosphäre bei einer Temperatur von 1800°C oder höher und 2000°C oder niedriger für 5 Stunden oder mehr, und dann Abkühlen auf Raumtemperatur über 6 Stunden oder mehr, und
einen Hochglanzpolierschritt zum Hochglanzpolieren der ersten Fläche (2a) und der zweiten Fläche (2b) nach dem Wärmebehandlungsschritt, und
(ii) Ausbilden eines Farbabschnitts (3) auf mindestens der ersten Fläche (2a) oder der zweiten Fläche (2b) des erhaltenen Substrats für ein Farbrad (2).

## Revendications

1. Roue de couleur (1), comprenant :
un substrat pour une roue de couleur (2), le substrat étant fait de saphir et comprenant une forme de plaque comprenant une première surface (2a), une deuxième surface (2b) opposée à la première surface (2a), et une troisième surface (2c) reliée à la première surface (2a) et à la deuxième surface (2b),
où la première surface (2a) et la deuxième surface (2e) sont des plans c,
une partie colorée (3) sur au moins la première surface (2a) ou la deuxième surface (2b),
**caractérisée en ce que**
une pluralité de couches de structure en terrasse (7) ayant chacune une surface de terrasse (4) et une surface latérale (5) en contact avec une ligne de bord (6) de la surface de terrasse (4) sont positionnées dans au moins une partie de la troisième surface (2c).

2. Roue de couleur (1) selon la revendication 1, le substrat pour une roue de couleur (2) comprenant en outre :
une partie plate dans au moins une partie de la troisième surface (2c).

3. Roue de couleur (1) selon la revendication 1 ou 2, dans laquelle une largeur de la surface de terrasse (4) est de 1,0 µm à 5,0 µm.

4. Projecteur comprenant la roue de couleur (1) selon l'une quelconque des revendications 1 à 3.

5. Procédé de fabrication d'une roue de couleur (1), le procédé comprenant :
(i) la formation d'un substrat pour une roue de couleur (2), comprenant
une étape de préparation d'une plaque de saphir dans laquelle une première surface (2a) et une deuxième surface (2b) opposée à la première surface (2a) sont des plans c,
une étape de traitement thermique consistant à maintenir la plaque de saphir dans une atmosphère sous vide ou une atmosphère de gaz inerte à une température de 1800°C ou plus et 2000°C ou moins pendant 5 heures ou plus, puis à refroidir à la température ambiante pendant 6 heures ou plus, et
une étape de polissage miroir consistant à polir miroir la première surface (2a) et la deuxième surface (2b) après l'étape de traitement thermique ; et
(ii) la formation d'une partie colorée (3) sur au moins la première surface (2a) ou la deuxième surface (2b) du substrat obtenu pour une roue de couleur (2).
